**Europäisches Patentamt**

**European Patent Office**

**Office européen des brevets**

(19)

(11) Veröffentlichungsnummer: **0 104 411**
**B1**

(12) # EUROPÄISCHE PATENTSCHRIFT

(45) Veröffentlichungstag der Patentschrift:
**20.11.86**

(21) Anmeldenummer: **83108191.4**

(22) Anmeldetag: **19.08.83**

(51) Int. Cl.⁴: **B 01 J 19/00**, G 05 D 21/02 //
C07C143/66

(54) **Strukturierter Aufbau und dezentrale Führung von Produktionsanlagen.**

(30) Priorität: **31.08.82 DE 3232401**

(43) Veröffentlichungstag der Anmeldung:
**04.04.84 Patentblatt 84/14**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
US - A - 3 220 998
US - A - 3 759 820

REGELUNGSTECHNISCHE PRAXIS, Band 21, Nr. 11,
November 1979, Seiten 310-313, München (DE); W.
HOFMANN: "Automatisierung verfahrentechnischer
Prozesse mit dezentralen MSR-Systemen".
CONTROL ENGINEERING, Band 24, Nr. 5, Mai 1977,
Seiten 39-41, New York (USA); R.E. BOTHNE:
"Distributed control offers system reliability and low
initial investment".
REGELUNGSTECHNISCHE PRAXIS, Band 22, Nr. 9,
September 1980, Seiten 302-309, München (DE); L.
BORSI et al.: "Konzepte und Strukturen dezentraler
Prozessautomatisierungssysteme"
REGELUNGSTECHNISCHE PRAXIS, Band 21, Nr. 5, Mai

(73) Patentinhaber: **BAYER AG, Konzernverwaltung RP
Patentabteilung, D-5090 Leverkusen 1 Bayerwerk (DE)**

(72) Erfinder: **Niese, Manfred, Dr.,
Elisabeth-Langgaesser-Strasse 29, D-5090 Leverkusen
(DE)**

(56) Entgegenhaltungen: (Fortsetzung)
1979, Seiten 137-142, München (DE); K.F. FRÜH:
"Tradition un Moderne: Das dezentrale
Prozessautomatisierungssystem von Siemens".
REGELUNGSTECHNISCHE PRAXIS, Band 24, Nr. 4, April
1982, Seiten 124-131, München (DE); K.F. FRÜH:
"Systemporträt: Contronic P".

## Beschreibung

Die Erfindung betrifft ein Verfahren zur Steuerung chemischer Produktionsanlagen durch manuelle, geregelte und/oder prozessgesteuerte Führungssysteme, indem ein Prozess in Teilaufgaben über Schaltungen der Apparate und Einstellungen der Parameter entsprechend der Rezeptur und den ermittelten Messwerten gefahren wird.

Es wird stets versucht, beim Betrieb chemischer Produktionsanlagen die Zeiten, in denen aufgrund von Störungen oder Betriebsartenänderungen nicht mit der geforderten Solleistung gefahren werden kann, zu minimieren. Selbst bei Verfahren mit nur wenigen Teilprozessen ist auch bei Einsatz einer elektronischen Datenverarbeitungsanlage nicht bekannt, wie eine optimale Strategie zum Erreichen der Solleistung für das Gesamtverfahren zu erreichen ist.

Zwar sind alle zur Verfahrensführung erforderlichen Einzeldaten bekannt, aber die Zusammenarbeit verschiedener Verfahrensgruppen ist gewöhnlich so wenig flexibel, dass für nicht vorhersehbare Abweichungen und Störungen im Ablauf der Teilaufgaben erhebliche Sicherheitszeitpolster unerlässlich werden. Es bleibt vielfach dem Fingerspitzengefühl des Personals anheimgestellt, wie es die Zusammenarbeit der Teilprozesse koordiniert. Erfahrungsgemäss sind besonders das Anfahren und Laständerungen mit Störungen und Unterbrechungen verbunden; beispielsweise, weil Einzelbereiche die geforderte Leistung nicht zum rechten Zeitpunkt erbringen können oder die Anpassung der Betriebsparameter zu träge ist, was auch zu einem Herauslaufen aus dem Sollbereich und meist zu einer zeitaufwendigen Korrektur, u.U. sogar zum Neubeginn des beabsichtigten Vorganges, führt. Bei fest eingeplanten Reservezeiten kann ein Anfahren oder eine Laständerung der Anlage schon definitionsgemäss nicht mit der kürzestmöglichen Vorgangszeit erreicht werden.

Es sind kein Steuerverfahren und keine darauf abgestimmte Anlage bekannt, mit denen bei Änderung des Arbeitszustandes in einem, mehreren oder allen Teilprozessen optimale Strategien für eine maximale Leistung des Gesamtverfahrens erreichbar sind.

Generell sind Strukturen dezentraler Prozessautomatisierungssysteme bekannt, bei denen eine Abteilung des Rechnersystems gemäss den anstehenden Mess-, Steuerungs- und Regelanforderungen erfolgt (vgl. «Konzepte und Strukturen dezentraler Prozessautomatisierungssysteme», REGELUNGSTECHNISCHE PRAXIS, Bd. 22, Nr. 9, Sept. 1980, Seiten 302–309).

Aufgabe der Erfindung ist es, ein Verfahren zur Steuerung chemischer Produktionsanlagen zu finden, welches bei Normal- bzw. Teillastbetrieb, bei Änderungen des Betriebes und bei örtlichen Störungen sicher unter optimalen produktiven Bedingungen mit gleichbleibender Produktqualität sowohl von Hand als auch über bekannte Steuerungsanlagen gefahren werden kann.

Die Aufgabe wird erfindungsgemäss dadurch gelöst, dass jedem der durch Puffer untereinander entkoppelten, autark arbeitenden, sequentiellen oder kontinuierlichen Teilaufgaben mit zwangsläufigem Volumenfluss über einen zugehörigen Steuerbereich mittels jeweils nur einem der diskreten, auf Nennleistung bezogenen Fahrwert und nur einer der zugelassenen Betriebsarten zur Schaltung der Flusswege gesteuert wird, welche wiederum mit optimalen, einmal fest vorgegebenen Parametern bzw. Flusswegen gekoppelt sind.

Die Steuerung erfolgt also dadurch, dass jeder Steuerbereich volumenstrommässig entkoppelt ist und autark gesteuert wird; jedem Steuerbereich nur die Betriebsart und der Fahrwert aus einer diskreten Anzahl von Fahrwertstufen vorgegeben werden kann; bei jeder Fahrwert- oder jeder Betriebsartänderung alle verfahrensbedingten Prozessparameter und Flusswege entsprechend der Rezeptur geändert werden; Fahrwertänderungen hinsichtlich Fahrwertsprunghöhe und Sprungwartezeit eingeschränkt durch das Verfahren nur aus einem quasistationären Zustand heraus, soweit es nicht durch die Pufferstände vor und hinter dem Steuerbereich verhindert wird, eingeleitet werden können, wobei der quasistationäre Zustand eines Steuerbereichs durch ein hinreichend lange anstehendes Signal gekennzeichnet ist, das erzeugt wird, wenn alle Arbeitsparameter des Steuerbereichs innerhalb verfahrensbedingter, vorgegebener Normalzustandsgrenzen liegen.

Mit der Erfindung wird erreicht, dass jeder in einem Steuerbereich durchgeführte Teilvorgang des Gesamtverfahrens in jedem Arbeitszustand gemäss einer optimal entwickelten Vorschrift für diesen Steuerbereich, unabhängig von den Vorgängen in den anderen Steuerbereichen des Verfahrens, durchgeführt werden kann und dass durch die Optimierung eines Einzelvorganges nicht die Optimierungsfähigkeit vorlaufender oder nachfolgend angeordneter Arbeitsvorgänge beeinträchtigt wird. Erst dadurch wird eine überschaubare und in vielen Fällen einfachere Führungstechnik erreicht. Von besonderem Vorteil ist dabei, dass die Anlage für Informationsverarbeitung und für Führungseingriffe durch Bedienungspersonal gleich gut geeignet ist wie für solche durch Prozessleitsysteme. Sie zeichnet sich gerade dadurch aus, dass bei Personalbetrieb und EDV-Steuerung die gleiche Strategie vorliegt und zu jedem Zeitpunkt ein Führungswechsel zwischen Personal und EDV-Anlage möglich ist und kein Irrtum über den Zustand und die Eingriffsmöglichkeiten herrschen kann, sondern stets eindeutige Massnahmen ergriffen werden können. Eine Anlage mit der erfindungsgemässen Steuerungsstruktur kann – wie bei Grossanlagen üblich – problemlos einem Prozessleitsystem übergeben werden, da eine eindeutige Identifikation der Verfahrenszustände und eine reproduzierbare Beherrschung der Verfahrensfunktionen gewährleistet ist.

Wesentliche Punkte der Erfindung sind die konsequente Untergliederung des Verfahrens bzw. die Strukturierung der Anlage in dezentrale, autarke Steuerbereiche. Ein Steuerbereich beinhaltet einen abgeschlossenen Arbeitsvorgang mit Einsatzstoff(en) am Anfang und Endprodukt am Ausgang; das Verfahren kennzeichnet die dafür notwendigen Massnahmen. Art und Ausmass der Massnahmen werden in der Rezeptur festgelegt. Sie beinhaltet die im Verfahren anzuwendenden Stoffe und ihre Mengen sowie die physikalischen Arbeitsbedingungen. Der Steuerbereich ist für eine abgeschlossene Aufgabe ausgelegt, was nicht heissen muss, dass Apparate eines Steuerbereichs bei Eignung nicht auch für andere Prozessaufgaben verwendet werden können. Zwischen den Apparaten eines Steuerbereichs herrscht eine zwangsläufige Volumenflusskopplung, wodurch bei Änderung der Betriebsart oder des Fahrwertes alle Apparaturen simultan die gleiche Betriebsart und den gleichen Fahrwert annehmen; eine gewisse Zeitverzögerung beim Mengenstrom kann dabei unvermeidlich sein; eine Entkopplung des Steuerbereichs-Volumenflusses im vorausgehenden und nachfolgenden Steuerbereich wird durch Puffer (Leervolumina) an Ein- und Ausgang des Steuerbereiches erreicht, im Steuerbereich darf keine Zwischenpufferung des Volumenflusses vorgenommen werden.

Jeder Steuerbereich ist autark gesteuert und wegen der Volumenflussentkopplung auch im Masse des Füllgrades der Kopplungspuffer autonom vom Gesamtverfahren. Die Führungsgrösse jedes Steuerbereichs ist der Steuerbereichsfahrwert. Ein Steuerbereichsfahrwert 100 entspricht der Leistung des Steuerbereichs, die für die Erbringung der Anlagennennleistung erforderlich ist.

Der Fahrwertbereich zwischen minimalem Fahrwert, der in vielen Fällen 0 sein wird (bei bestimmten Verfahren kann aber ein endlicher Fahrwert unerlässlich sein), und dem maximalen Fahrwert, der die mögliche Überlastungsgrenze angibt, wird in diskrete Fahrwertstufen unterteilt, deren Stufenweite so gewählt wird, dass die durch die Fahrwerte definierten Parameterwerte durch Messwerte charakterisiert werden können, die eindeutig ausserhalb der durch die verwendeten Messgeräte bestimmten Fehlergrenzen liegen. In den meisten Fällen ist eine 10%-Stufung ausreichend.

Die Steuerbereichsfahrwerte können nur einen dieser Fahrwerte annehmen. Jedem Fahrwert eines Steuerbereiches entspricht ein ganz bestimmter Volumenfluss in diesem Steuerbereich; aufgrund der Rezeptur können aber bei gleichen Fahrwerten die Volumenflüsse in verschiedenen Steuerbereichen verschieden sein. Während des Verfahrensablaufs können die Fahrwerte in jedem Steuerbereich unterschiedlich sein; ein Steuerbereichsfahrwert kann grösser, gleich oder kleiner wie der Verfahrenssollfahrwert sein.

Mit der Vorgabe eines Sollfahrwerts für einen Steuerbereich ist gemäss der Erfindung neben der Bestimmung des Eingangsvolumenflusses die Vorgabe aller durch das Verfahren bedingten weiteren Prozessparameter verbunden. Durch Regelungen kann die exakte Einstellung der vorgegebenen Parameter unterstützt werden, wobei diese Regelung nur von den Messwerten der zu regelnden Parameter selbst geführt werden darf; eine Beeinflussung durch andere Messparameter ist nicht zulässig; insbesondere ist der Sollwert des Volumenflusses nicht direkt abhängig vom Stand der Eingangs- oder Ausgangspuffer des Steuerbereiches. Diese Stände werden bei der Ermittlung des für den Steuerbereich vorzugebenden Fahrwerts berücksichtigt. Wenn eine Übereinstimmung der Ist- und Sollparameter nicht erreichbar ist, werden weitere Massnahmen, insbesondere weitere Fahrwertänderungen, verhindert, und es ist Aufgabe des Betriebspersonals, die Ursachen dieser Abweichungen zu klären, die vorwiegend in Fehlfunktionen der verwendeten technischen Apparatur oder in fehlerhaften Einsatzstoffen bestehen; der Ausgleich der Abweichung erfolgt durch Behebung der technischen Fehlfunktion, Korrektur der Stoffwerte, durch eine neue Fahrwertrezeptur, aber nicht durch Beeinflussung von Einzelparametern oder einen neuen Fahrwert der gültigen Fahrwertrezeptur.

Es zeigt sich, dass dadurch erheblich schneller Fehler ausgemerzt werden und Übergangsvorgänge bei Anfahren, Laständerung und Weiterlauf nach Unterbrechungen überschaubar bleiben.

Jedem Steuerbereich – im Konti- wie im Batch-Betrieb – ist eindeutig ein Fahrtwert zuzuordnen. Bei Konti-Steuerbereichen bestimmt der Fahrwert den Volumenstrom, wobei Änderungen des Stromes in allen Teilen des Steuerbereiches simultan (eine geringe Zeitverzögerung auf Grund der Trägheit ist nicht auszuschliessen) erfolgen, und starre, nicht entkoppelte Flussrückführungen nur innerhalb der Puffergrenzen zulässig sind. Bei Batch-Steuerbereichen bestimmt der Fahrwert den Startabstand neu einzusetzender Batch-Partien.

Rückflüsse, die anderen Steuerbereichen zugeführt werden sollen, müssen über eigene Puffer entkoppelt werden. In allen Führungsstufen (Steuerbereich, Gruppe, Hauptgruppe) ist der Volumenfluss der Hauptprozessindikator, der über die Rezeptur unmittelbar mit dem Fahrwert verknüpft ist.

Die Wechselwirkung des Volumenflusses mit dem Arbeitsvolumen der Apparatur erzeugt das Zeitverhalten des in der Apparatur durchgeführten Arbeitsvorganges. Der Vorgang selbst entsteht bei chemischen Verfahren durch die in diesem Volumenfluss auftretenden Stoffmengen, die durch Dichte- bzw. Konzentrationsparameter charakterisierbar sind, und somit sind auch bei Produktionsverfahren die Stoffflüsse festgelegt und bekannt. In ähnlicher Weise sind mit dem Volumenfluss auch die Energieflüsse gekoppelt. Aus flussintegralen sind Stoffeinsatz und Umsatzmengen herleitbar.

Das (Verweil)-Zeitverhalten in einem Steuerbereich ist gegeben durch den Quotienten aus Arbeitsvolumen und Ausgangsvolumenfluss. Das Gesamtzeitverhalten eines Steuerbereichs wird bei mehreren Arbeitsapparaturen von der Teilapparatur bestimmt, die die grösste Verweilzeit aufweist. Als Beispiel für einen Verweilzeit-abhängigen Konzentrationsaufbau $C_x$ in einer Konti-Anlage ergibt sich bei konstantem, stationärem Volumenfluss

$$C_x = C_0 + (C_e - C_0) [1 - \exp(-t/_{TV})],$$

wobei $C_e$ die Konzentration des Eingangsflusses, $C_0$ die Startkonzentration, TV die Verweilzeit, der Quotient aus Arbeitsvolumen und Ausgangsvolumenfluss, und t die abgelaufene Zeit ist.

Das Arbeitsverhalten von Steuerbereichen ist durch einige wenige Betriebsarten eindeutig beschreibbar, die unterteilbar sind in solche ohne und solche mit Fahrwertänderungen. Anfahren mit Produkt, Laständerung und Weiterlauf nach Unterbrechung sind mit Fahrwertänderungen verbunden, während Apparaturstillstand, Inbetriebnahme der Apparatur, stationärer Betrieb bei konstantem Fahrwert, (Störungs)Unterbrechung und Ausserbetriebnahme der Apparatur Betriebsarten ohne von aussen vorgebbare Fahrwerte sind. Bei den Übergangsbetriebsarten sind Einschränkungen sowohl vom Verfahren her (Fahrwert, Sprunghöhe und Sprungwartezeit) als auch von den aktuellen Prozessparametern (Vorliegen eines Normalzustandssignals innerhalb vorzugebender Grenzen über eine vorzugebende Zeitdauer) zu beachten. Die möglichen Betriebsarten sind:

STOP: Stillstand der Apparatur; Zustand vor Inbetriebnahme und nach Abfahren;

VORB: Inbetriebnahme der Apparatur; Herstellen der Arbeitsbereitschaft für die Aufnahme der Apparaturarbeit (Produktion);

ANFA: Anfahren; Beginn der Produktzufuhr und gegebenenfalls der Reaktion; Ausführen von Fahrwertstrategien;

NORM: stationärer Zustand der Anlage, wenn Fahrwert und Sollfahrwert gleich sind;

AEND: Laständerung; Herstellen des stationären Arbeitszustandes (NORM) bei geändertem Sollfahrwert; gegebenenfalls Ausführen von Fahrwertstrategien;

HALT: Unterbrechung des Arbeitsvorganges durch Sperrung der Produktzufuhr (Volumenfluss) bei gleichzeitiger Beibehaltung der dem bisher herrschenden Fahrwert entsprechenden sonstigen Prozessparameter;

HALT 2: Unterbrechung des Arbeitsvorganges durch Sperrung der Produktzufuhr (Volumenfluss) und Änderung der sonstigen Prozessparamter auf Sicherheitswerte;

WEIL: Weiterlauf nach Unterbrechung; Wiederherstellen des gleichen Arbeitszustandes, der durch HALT/HALT 2 unterbrochen wurde; Ausführung von Fahrwertstrategien;

ABFA: Abfahren, Beenden des Arbeitsvorganges; Entleeren und Ausserbetriebsetzen der Apparatur.

Für alle Betriebsarten – ausser VORB (Inbetriebnahme der Apparatur) – beinhalten die obigen Definitionen eine Standardvorschrift, die bei allen Steuerbereichen sowohl im Personalbetrieb als auch im vollautomatisierten Betrieb Anwendung findet. Die Anpassung der Betriebsart-Vorschrift an eine spezielle Steuerbereichsaufgabe erfolgt durch Angabe numerischer Parameter für Strategieabläufe, Benennung relevanter Messignale und zugehöriger Messwertgrenzen und Einrichtung von Flusswegsteuerungen.

Durch die übersichtliche Strukturierung der Anlage und die dezentrale, autarke Verfahrenssteuerung ist stets unmittelbar der tatsächliche Leistungsstand jedes Steuerbereichs und der Gesamtanlage erkennbar. Ob die Anlage im Personal- oder Rechnerbetrieb gefahren wird, ist völlig gleichlaufend; die Führungsmethodik ist in beiden Fällen identisch.

Gemäss der Erfindung werden in der Anlage Fahrwertänderungen nur in Stufen vorgenommen. Dieser Betrieb könnte als quasistationäre Fahrwertstrategie bezeichnet werden. Während der Ablaufzeit eines Teilschrittes werden zeitlich unverändert die in der Rezeptur enthaltenen Werte der Führungsparameter aufrechterhalten, die dem jeweiligen Fahrwert zugeordnet sind. Die grösstmögliche Fahrwertsprunghöhe muss dem Arbeitsverhalten der Steuerbereiche angepasst werden, Fahrwertstufungen von 10 bis 30 sind bevorzugt. Die Länge der Zeit, bis ein weiterer Fahrwertsprung möglich ist, hängt bei chemischen Vorgängen von der Verweilzeit, d.h. vom Erreichen eines quasistationären Konzentrationszustandes in der Apparatur (etwa 3- bis 4-mal TV), bei technischen Vorgängen von der grössten Totzeit der im Steuerbereich verwendeten Regelgeräte, der Zeit bis zum Erreichen eines quasistationären Arbeitszustandes der Regelgeräte, ab.

Der Übergang zu einem höheren Fahrwert ist weiterhin abhängig vom Vorliegen eines Normalzustandssignals, welches erzeugt wird, wenn die Messwerte der vorgangsrelevanten Parameter nach Ablauf der Sprungwartezeit über eine bestimmte Zeitdauer hinweg innerhalb vorgegebener Grenzen liegen; diese Grenzen sind nicht identisch mit Alarm- und Sicherheitsgrenzwerten. Dieses zeitbewertete Normalzustandssignal gibt an, dass alle Regelvorgänge abgeschlossen sind; hierdurch ist für jede weitere Teillaständerung ein wohldefinierter Ausgangszustand des Steuerbereichs gewährleistet und damit eine Erhöhung der Verfahrenssicherheit.

Bei herkömmlichen Steuerverfahren spielt das Normalzustandssignal keine Rolle. Bei dem erfindungsgemässen Verfahren gibt es selbstverständlich auch Alarm- und Sicherheitsgrenzen mit erforderlichenfalls automatischen Abschaltungen. Wenn solche Grenzen überschritten werden, muss das Verfahren überprüft werden; es wird jedoch bei dem Steuerverfahren grundsätzlich nicht in die Rezeptur eingegriffen, sondern durch Schalteingriffe der Volumenfluss im Steuerbereich unterbrochen, jedoch alle anderen Prozessparameter aufrechterhalten. Bei längerdauernden Störungen kann auf Anweisung oder automatischen Eingriff hin eine gesonderte Strategie für diesen Steuerbereich angeordnet werden, mit der alle Prozessparameter auf Sicherheitssollwerte gesetzt werden.

Bei Störungen in einem Steuerbereich ist es möglich, soweit es die Produkt- oder Leervolumenvorräte in den Kopplungspuffern zulassen, die anderen Steuerbereiche des Verfahrens evtl. mit vermindertem Fahrwert weiter zu betreiben und den gestörten Steuerbereich zu reparieren oder zu ändern, was in herkömmlichen Anlagen viel schneller und öfter zu einem Stillstand des Gesamtverfahrens führen würde.

Die autarken Geräte in jedem Steuerbereich führen autonom alle Eingriffe im Steuerbereich durch. Solche Eingriffe werden veranlasst durch Führungsanweisungen des Personals oder eines Prozessleitsystems, über Regler für analoge Einstellungen von physikalischen Grössen und durch digitale Flussweg-Steuerungen für die Bearbeitungen von betriebsartabhängigen Schaltvorgängen.

Für alle Verfahrenszustände (Betriebsarten), werden Flusswege für Stoff- und Energieträger (Kühlwasser, Dampf, Wärmeträger, Schaltzustände von elektrischen Heizungen) apparativ festgelegt. Diese Flusswege werden durch Schaltorgane (Ventile, Pumpen usw.) freigegeben oder gesperrt. Diese Flusswege sind betriebsartspezifisch und werden je nach auftretender oder herzustellender Betriebsart aktiviert. In diese Aktivierung werden weiterhin alle die bei der betreffenden Betriebsart benötigten aktiven Steuergeräte (Regler) einbezogen.

Alle diese – oft sehr zahlreichen – Schaltzustände können über eine betriebsartabhängige Schaltmatrix eindeutig und mit geringem Aufwand geschaltet werden.

Die digitale Flusswegschaltung bearbeitet zugleich alle vom Prozess gelieferten, Unterbrechungen auslösende Signale und bewirkt alle Eingriffe bei den im Steuerbereich installierten Geräten.

Die Unterbrechungen auslösenden Signale werden bei der Bearbeitung in zwei Gruppen unterteilt:

a) Unbedingte Unterbrechungssignale: Bei ihrem Auftreten darf der Steuerbereich nicht arbeiten; der Weiterlauf ist möglich, wenn keines dieser Signale vorliegt;

b) sperrbare Unterbrechungssignale: Diese Signale können bei Weiterlauf oder in bestimmten anderen Betriebsarten (Anfahren, Abfahren) zeitweilig gesperrt werden, sie haben dann keine unterbrechende Wirkung.

Bei Batch-Prozessen treten sequentielle Vorgangsabläufe auf. Auch bei kontinuierlichen Steuerbereichen können in bestimmten Betriebsarten, beispielsweise beim Anfahren, sequentielle Vorgänge auftreten. In den vor- und nachgeschalteten Puffern treten hierdurch periodische Änderungen des Pufferinhalts auf.

Ist dem Batch-Steuerbereich ein Konti-Steuerbereich vor- oder nachgeschaltet, ergibt sich im Kopplungspuffer beider Bereiche ein stationärer Eingangs- und ein periodischer Ausgangsfluss, bzw. ein periodischer Eingangs- und stationärer Ausgangsfluss.

Auch für den im Steuersystem befindlichen Batch-Steuerbereich gilt ein Steuerbereichsfahrwert, der hier den Startbestand zweier aufeinander folgenden Batch-Einsätze bestimmt und den möglichen stationären Eingangs- oder Ausgangsvolumenfluss aus dem Kopplungspuffer kennzeichnet. Der Ablauf der Batch-Sequenz wird in stets gleichbleibender Weise durch eine gesonderte digitale Steuerung bewirkt. Beim Ablauf dieser Sequenz existieren Arbeitszustände, die in Analogie zu den Betriebsarten der Konti-Steuerbereiche mit Batch-Zuständen bezeichnet werden:

LAUF: Normaler Ablauf der Schrittfolge

HALT: Unterbrechung (bei Störung)

WEIL: Weiterlauf nach Unterbrechung im unterbrochenen Schritt

STOP: Abbruch der Sequenz, Fortsetzung der Sequenzarbeit nach Neustart, Feststellung der bereits bearbeiteten Schritte und Herstellung der Ausgangsbedingungen für den nächsten zu bearbeitenden Schritt.

Diese Batchzustände werden durch die digitale Batch-Steuerung bei Auftreten eines diesen Batchzuständen zugeordneten Signals (Schalter, Rechnersignal) hergestellt.

Durch die Einführung der Batchzustände und Batch-Fahrwert können mit dem erfindungsgemässen Steuerverfahren Konti- und auch Batch-Steuerbereiche in der bereits geschilderten Weise bearbeitet und gemeinsam geführt werden.

Für die Koordination der Steuerbereichsarbeit durch einen Prozessrechner werden die Steuerbereiche in Gruppen zusammengefasst; verfahrensmässig ist es eine Kopplung mit Puffern. Man kann drei Arten von Gruppen unterscheiden:

Konti-Gruppen: entstanden durch serielle und/oder parallele Kopplung mehrerer Konti-Steuerbereiche;

Batch-Gruppen: durch serielle und/oder parallele Kopplung mehrerer Batch-Steuerbereiche;

Haupt-Gruppen: durch serielle Kopplung von Batch- und Konti-Gruppen.

Als logistische Führungsparameter für die Gruppen dienen die Stände in den Kopplungspuffern und in den Steuerbereichen der Gruppen Fahrwerte und Betriebsart (befehle).

Befinden sich alle Steuerbereiche einer Konti-Gruppe im stationären Normalzutand bei gleichem (Gruppen)Fahrwert, weisen auch alle Puffer einen stationären Stand auf; dieser Stand soll so bemessen sein, dass sowohl ein ausreichender Produktvolumenpuffer für den nachfolgenden, als auch ein hinreichender Leerpuffer für den produktabgebenden vorangehenden Steuerbereich vorhanden sind; dieser Stand wird mit Puffer-Normalstand bezeichnet. Bei Störung eines der Gruppen-Steuerbereiche werden seine Kopplungspuffer durch die Vorläufer aufgefüllt, bzw. durch die Nachfolger entleert. Bei Unter- oder Überschreitung bestimmter Pufferstände wird der Fahrwert der jeweils benachbarten Steuerbereiche auf den zulässigen Minimalfahrwert herabgesetzt, um möglichst viel Störungsbehebungszeit zu gewinnen und ein Stillsetzen der übrigen, ungestörten Gruppen-Steuerbereiche möglichst zu vermeiden, was meist eine Verminderung der Produktqualität und der Ausbeute zur Folge hätte.

Durch die Verwendung definierter Fahrwerte und den hierdurch stets gegebenen stationären Volumenfluss kann durch Ermittlung der Flussintegrale und Kenntnis der momentanen Pufferstände eine optimale Weiterlaufstrategie für alle Steuerbereiche der Gruppe geplant und durchgeführt werden. Das Optimierungsziel besteht darin, dass mit Erreichen des Gruppensollfahrwertes in der kürzestmöglichen Zeit zugleich alle Puffer den Normalstand aufweisen.

Die aus der Optimierungsrechnung sich ergebenden Führungsparameter sind Strategie-Startzeitpunkte, evtl. eine Verlängerung der einzelnen Fahrwertstufen-Dauer.

Die gleiche Methode wird für die Gruppenkoordinierung bei Anfahren und Laständerung verwendet; da stets die Inhalte der Puffer zu berücksichtigen sind, werden evtl. vorhandene Pufferfehlstände bei der Durchführung einer Gruppenstrategie korrigiert. Durch die Fahrwertmethode, die nur diskrete Fahrwertstufen und damit festgelegte Volumenflüsse zulässt, kann die optimierende Planung der Gruppenstrategien sehr exakt in der Anlage verifiziert werden.

Batch-Gruppen werden durch die gleiche Methode mit Konti-Gruppen koordiniert. Aus der Restlaufzeit der an den Kopplungspuffer nächstabgebenden Batchpartie und dem Inhalt des Kopplungspuffers ist der höchstzulässige Fahrwert für den vorangehenden oder nachfolgenden Konti-Steuerbereich bestimmbar und damit auch der Gruppenfahrwert für die Gruppe, der der angekoppelte Konti-Steuerbereich angehört; derart gekoppelte Batch- und Konti-Gruppen bilden eine integrierte Steuereinheit (Hauptgruppe), die gemeinsam gesteuert wird.

Die beschriebenen Gruppensteuerungen liefern an die unterlagerten Steuerbereiche Betriebsartanweisungen und Fahrwerte; diese Führungsanweisungen werden von den Steuerbereichen in der beschriebenen Weise ausgeführt.

In einer Gruppe kann bei der Durchführung einer Gruppenstrategie jeder Steuerbereich eine andere Betriebsart und einen anderen Fahrwert aufweisen und, obwohl die verschiedenen Steuerbereichsapparaturen innerhalb der Gruppe die unterschiedlichsten Verweilzeiten und Ablaufgeschwindigkeiten haben können, ist trotzdem durch den Führungsparameter «Fahrwert» das Verfahren in jedem Zustand kontrollierbar und beherrschbar.

Eine erfindungsgemäss aufgebaute Anlage ist besonders geeignet zur Simulation auf einer EDV. Damit können bereits, ehe die Anlage gebaut wird, alle möglichen Strategien erprobt werden.

Das erfindungsgemässe Steuerverfahren ist beispielhaft in den Zeichnungen dargestellt und im folgenden weiter erläutert. Es zeigen:

Fig. 1 einen Steuerbereich;

Fig. 2 eine Batch-Gruppe;

Fig. 3 eine Konti-Gruppe;

Fig. 4 eine Hauptgruppe;

Fig. 5 eine zentrale Verfahrensführung;

Fig. 6 die hierarchische Führungsstruktur;

Fig. 7 die zulässige Abfolge von Betriebsarten bei einem Konti-Verfahren;

Fig. 8 Fahrwertänderungen beim Anfahren einer vierstufigen Anlage;

Fig. 9 Pufferstände beim Anfahren einer vierstufigen Anlage;

Fig. 10 Fahrwertänderungen bei einer Laständerung einer vierstufigen Anlage;

Fig. 11 Pufferstände bei Laständerung einer vierstufigen Anlage;

Fig. 12 Flusswegschaltung in der Betriebsart NORM;

Fig. 13 Flusswegschaltung in der Betriebsart HALT;

Fig. 14 Flusswegschaltung in der Betriebsart STOP;

Fig. 15 Strukturierung einer Grossanlage zur Erzeugung einer Aminonaphtholsulfosäure.

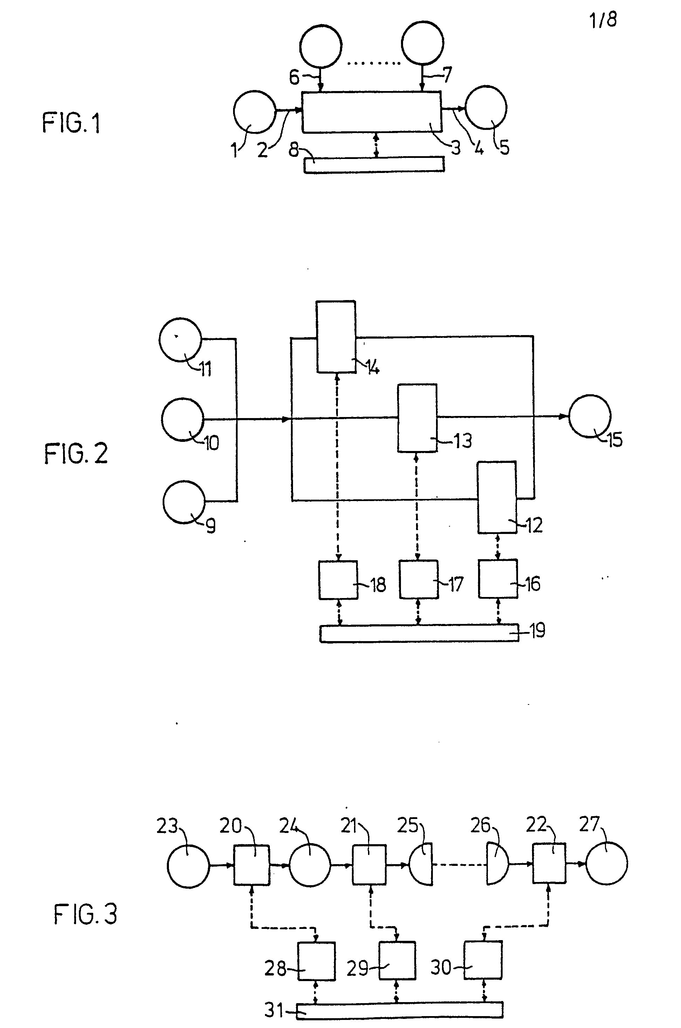

Fig. 1 zeigt eine Apparatekombination bzw. eine Verfahrensstufe eines dezentral geführten Steuerbereichs. Mit ihr wird eine abgeschlossene Teilaufgabe bzw. ein Prozessschritt des Gesamtverfahrens durchgeführt.

Vom Eingangspuffer 1 tritt der Eingangsvolumenstrom 2 in die Steuerbereichsapparatur 3 ein; der Ausgangsvolumenstrom 4 fliesst in den Ausgangspuffer 5 ab. Der Ausgangspuffer 5 ist identisch mit dem Eingangspuffer des nächsten Steuerbereichs. Der Kasten 3 steht symbolisch für einen Konti- oder Batch-Prozess. In die Apparatur 3 können weitere Volumenflüsse 6 . . . 7 einlaufen; der Ausgangsfluss 4 braucht nicht identisch mit dem Eingangsfluss 2 zu sein. Dem Steuerbereich 3 ist eine Steuerbereichsführung 8 zugeordnet, über die die Arbeitsgeräte des Steuerbereichs bedient und geführt werden. Sie bewirkt bei Konti-Steuerbereichen die Herstellung der Betriebsartvorschriften und der Fahrwertrezepturen; bei Batch-Steuerbereichen steuert sie den sequentiellen Ablauf der Arbeitsschritte.

Steuerbereiche mit gleichem Arbeitsmodus werden zu Gruppen zusammengefasst. Fig. 2 zeigt eine Gruppe von Batch-Steuerbereichen, Fig. 3 eine von Konti-Steuerbereichen. Das Beispiel in Fig. 2 ist typisch für die chargenweise Herstellung eines Zwischenprodukts; aus drei Ausgangssubstanzen in den Vorratsbehältern 9 bis 11, die natürlich auch Pufferfunktion haben, wird abwechselnd in den gleich aufgebauten Steuerbereichen 12 bis 14 ein Batchprozess durchgeführt; das fertiggestellte Produkt wird jeweils in den Puffer 15 abgegeben. Bei manchen Verfahren kann im Batch-Betrieb auf einen eigenen Puffer verzichtet werden, wenn die abgebende Stufe für eine gewisse Zeit auch als Produktspeicher dienen kann (virtueller Puffer).

Den Batch-Steuerbereichen sind die Steuerbereichsführungen 16, 17, 18 zugeordnet. Die Batch-Gruppensteuerung 19 koordiniert die Steuerbereichsführungen.

Fig. 3 zeigt eine serielle Folge von Konti-Steuerbereichen 20 bis 22 mit Puffern 23 bis 27. Diese Puffer sind als taktische Arbeitspuffer zu bezeichnen; es ist damit eine Flussentkopplung möglich. Auch solche Gruppen werden mit der Konti-Gruppensteuerung 31 dezentral geführt, die auf die Konti-Steuerbereichsführung 28 bis 30 einwirkt.

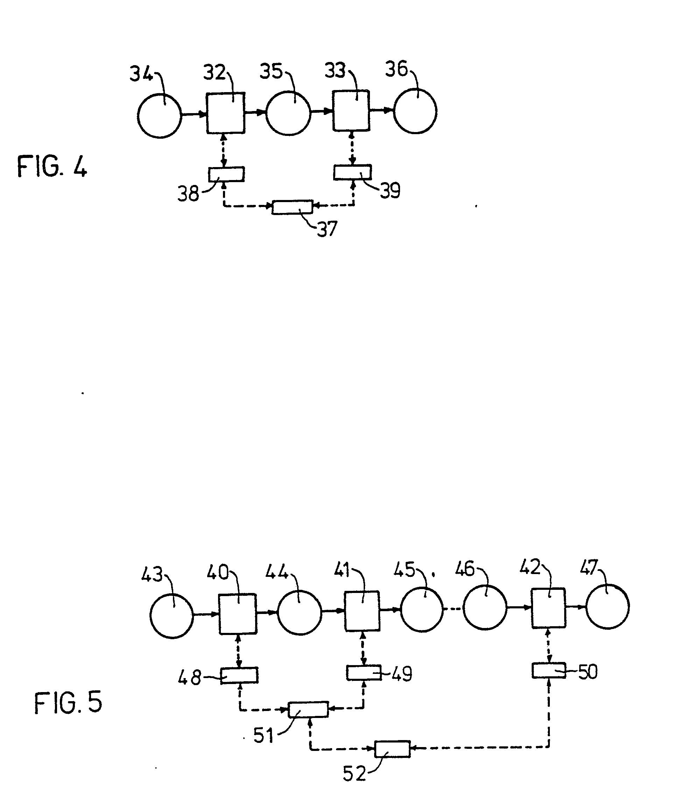

In Fig. 4 sind eine Batch-Gruppe 32, ähnlich wie in Fig. 2, und eine Konti-Gruppe 33, ähnlich wie in Fig. 3, zu einer Hauptgruppe zusammengefasst. Die Batch-Gruppe 32 ist durch den Eingangspuffer 34 zur Vorläufergruppe und durch den Puffer 35 zur Konti-Gruppe 33 hin entkoppelt; diese wird durch den Ausgangspuffer 36 abgeschlossen. Die Hauptgruppensteuerung 37 koordiniert die Batch-Gruppensteuerung 38 und die Konti-Gruppensteuerung 39 durch Betriebsart und Fahrwertbefehle.

In Fig. 5 ist schematisch ein Gesamtverfahren dargestellt. Vor, zwischen und nach den Hauptgruppen 40 bis 42 sind die Puffer 43 bis 47 angeordnet, die so gross gewählt werden, dass eine sehr starke Entkopplung bewirkt wird (strategische Puffer). Schematisch sind wieder die Gruppenführungen 48 bis 50 dargestellt; zwei Gruppen 48, 49 sind in diesem speziellen Fall zu einer Hauptgruppe vereinigt, die durch die Steuerung 51 geführt wird. Der Gesamtprozess wird zentral durch die Verfahrensführung 52 gesteuert.

Sowohl in Steuerbereichen als auch in Gruppen treten apparate- und verfahrensbedingt Fahrwertbegrenzungen auf. Der maximale Fahrwert eines Steuerbereichs bestimmt in gleicher Weise den maximalen Fahrwert der Gruppe oder der Quasifahrwert von Batchgruppen hängt von der Anzahl der verfügbaren Batchstufen ab.

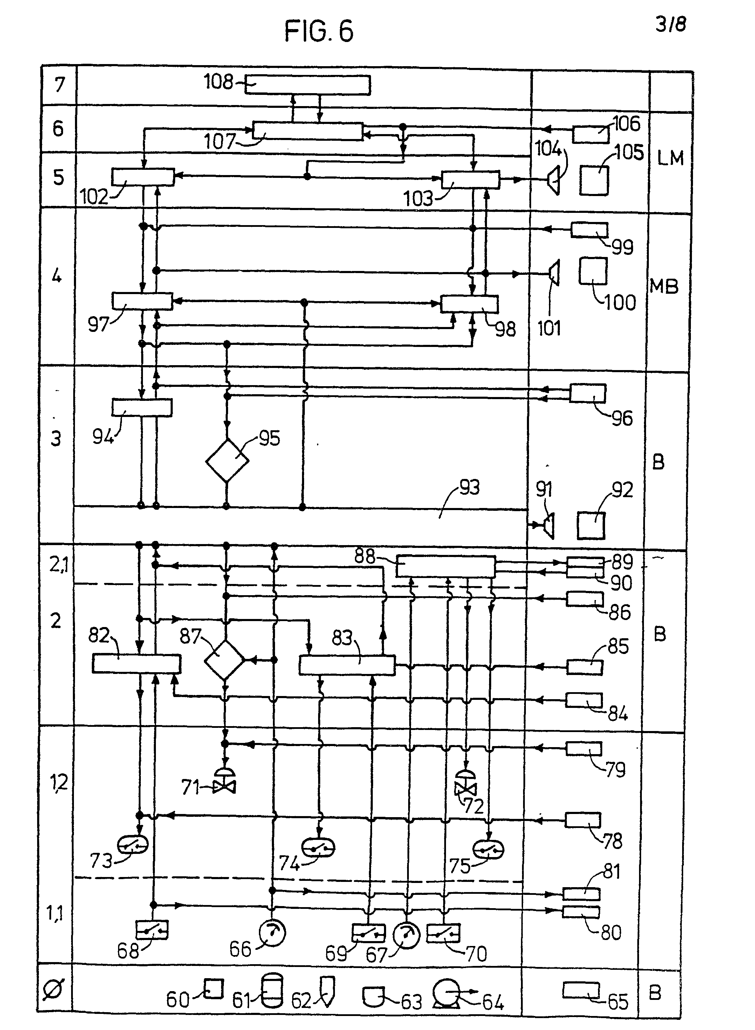

In Fig. 6 ist die Organisation des Steuerverfahrens allgemein dargestellt. Es lassen sich sieben Hierarchiestufen unterscheiden (linke Spalte). In der mittleren Spalte sind beispielhaft die Vorrichtungen dargestellt, auf die die Prozessführung einwirkt. In der rechten Spalte ist erkennbar, wer beim Personalbetrieb in der Regel einwirkt. Bei einer Produktionsanlage wird heute soweit wie möglich eine EDV-Anlage eingesetzt. Bei der erfindungsgemässen Anlage und dem erfindungsgemässen Steuerungsverfahren wird ein grosser Vorteil darin gesehen, dass der Personal- wie der Automatisierungsbetrieb in gleicher Weise strukturiert sind.

Auf der untersten Ebene 0 in Fig. 6 befinden sich alle Apparaturen der Anlage mit ihren Handbedienungsorganen (verschiedene Symbole mit den Bezugszeichen 60 bis 64). Irgendwelche Eingriffe in die Funktion der Apparaturen können nur durch das Personal (B) manuell an den Bedienungsorganen (65) der Apparaturen vorgenommen werden.

In der ersten Hierarchiestufe (1) befinden sich Mess- und Eingriffsgeräte, deren Wirkungsweise von einer entfernten Messstation oder -warte kontrolliert und beeinflusst werden kann. Im Feld 1.1. sind analoge Messwertgeber 66, 67 und digitale Kontaktgeber 68 bis 70 beispielhaft dargestellt, die den einzelnen Apparaturen in Stufe 0 zugeordnet sind.

In Feld 1.2 sind analoge Stellglieder 71, 72 (Regelventile, Stellmotoren) und digitale Schaltorgane 73 bis 75 enthalten, die wiederum den Apparaturen der ersten Stufe zugeordnet sind.

Handeingriffe des Bedienungsmannes (B) auf digitale Schaltorgane sind mit den Schaltern 78 und Verstellungen der analogen Stellorgane mit 79 möglich. Zur Information stehen ihm dabei die Messgeräte 81 und das Signaltableau 80 zur Verfügung.

In der nächsten Hierarchiestufe (2) ist die konventionelle diskrete Informationsverarbeitung angeordnet. Die Messignale der Stufe 1 werden in statischen 82 und dynamischen 83 Digitalschaltungen zu Stellsignalen 73, 74 verarbeitet, wobei die Steuerung 83 Abfolgen von Signalen liefern, die eine schrittweise Änderung der Schalt- und Apparaturzustände der Stufe 0 bewirken.

Über die Schalter 84 kann der Bedienungsmann (B) Einzelsignalschaltungen ausführen, über Schalter 85 Schaltfolgen auslösen. Mit dem Einstellgerät 86 kann der Bedienungsmann Sollwerte für Regler 87 einstellen.

In der Stufe 2.1 sind unabhängige Sicherheitsschaltungen 88 angeordnet, die über eigene Messwertgeber 67, 75 und Stellorgane 70, 72 verfügen. Über das Alarmtableau 89 wird der Sicherheitszustand angezeigt; mit der Rücksetzung 90 können Alarmeingriffe zurückgesetzt werden.

Alle Mess- und Stellsignale der Stufe 1 und alle Arbeitsmeldungen der Stufe 2 werden zur Stufe 3 weitergeleitet, in der eine zentrale Verarbeitung dieser Signale erfolgt. Arbeits- und Störungsprotokolle werden über einen Bildschirm 92 oder Drucker 91 an das Bedienungspersonal (B) ausgegeben. Diese zentrale Verarbeitung erfolgt im Basissystem eines oder mehrerer Rechner 93. Dieses enthält auch alle zugehörigen Einrichtungen (94) zur Verarbeitung und Auswertung von Digitalsignalen sowie Regler, die zur Korrektur der externen Regler 87 in der Stufe 2 oder zur direkten Ansteuerung der Stellventile 71 dienen. Sollwerte für die Regler 95 und Befehle für die Digitalauswertung 94 werden vom Bedienungspersonal über die Tastatur 96 eingegeben.

In der Stufe 4 sind die Batch-Steuerbereichssteuerungen 97 und die Steuerungen der Konti-Steuerbereiche 98 enthalten. Sie erhalten aus der Stufe 3 alle Mess- und Arbeitssignale, die von ihnen benötigt werden. Sie erhalten weiterhin über eine Tastatur 99 durch das Personal (Meister, Bedienungsmann, M, B) Betriebsart- und Fahrwertbefehle. Die Steuerungen verarbeiten sie zu Regler-Sollwerten und digitalen Schaltsignalen und übermitteln sie zeitgerecht zur Ausführung an die Regler und Digitalsteuerungen der Stufe 3, die sie wiederum an die ausführenden diskreten Geräte der Hierarchiestufe 2 weiterleiten. Über ihren Arbeitszustand und den Gesamtzustand des Steuerbereiches unterrichten die Steuerungen das Personal über den Bildschirm 100 und den Drucker 101.

Die Gruppensteuerungen des Bereichs 5 koordinieren die Arbeit der Steuerbereiche der Stufe 4. Aus den Arbeitszustandmeldungen, Pufferstandssignalen und Betriebsart- und Gruppenfahrwertbefehlen des Personals (Meister (M) ) ermitteln sie Betriebsart und Fahrwerte für die ihnen untergeordneten Steuerbereiche und übergeben sie zeitgerecht zur Ausführung. Je nach Arbeitsweise sind Gruppensteuerungen für Batch-Gruppen 102 und Konti-Gruppen 103 vorhanden. Arbeits- und Zustandsmeldungen werden über Bildschirm 105 und Drucker 104 ausgegeben. In der Stufe 6 ist die Hauptgruppensteuerung 107 angeordnet, die Batch- und Konti-Gruppen koordiniert und gemeinsam führt. Aus Arbeitssignalen der Gruppensteuerung und direkten Messignalen des Prozesses (Pufferstände) werden jeweils der Gruppenfahrwert und die Gruppenbetriebsart festgelegt. Die Gruppensteuerungen 102, 103 bestimmen gemäss diesen Führungsanweisungen die Betriebsarten, Fahrwerte und Startzeiten, die von den Steuerbereichsführungen 97 und 98 ausgeführt werden. Die Hauptgruppenfahrwerte werden mit der Tastatur 106 vom Personal bestimmt und eingegeben.

Die Gesamtverfahrensführung (Verfahrensautopilot, VAP) befindet sich in Stufe 7. Sie beobachtet Hauptgruppenfahrwerte und Pufferstände und ermittelt hieraus maximal zulässige Fahrwerte für die Hauptgruppensteuerungen.

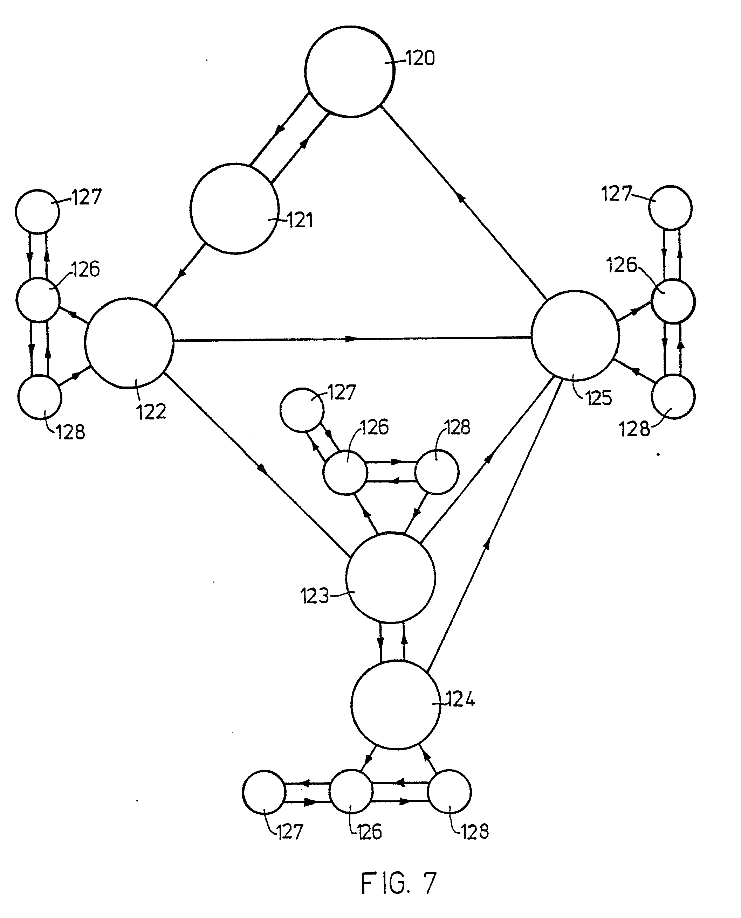

In Fig. 7 sind alle zulässigen Betriebsarten (Prozesszustände) und alle zulässigen Abfolgen dieser Betriebsarten für ein Konti-Verfahren dargestellt.

Bei der Betriebsart (STOP) 120 steht die Apparatur still; es ist der Zustand vor der Inbetriebnahme und nach Abfahren bzw. Entleeren der Apparatur. Es werden keine Führungsmassnahmen vorgenommen. In diesem Zustand kann die Anlage durch das Personal gereinigt und gewartet werden. Die einzig zulässige Folgebetriebsart ist (VORB) 121.

Die Betriebsart (VORB) 121 betrifft die Inbetriebnahme der Apparatur. Sie beinhaltet vor allem Arbeiten des Personals: Zustandskontrolle der Apparatur, Voreinstellen von Handventilen, Einschalten von Pumpen, Rührern usw., Befüllen der Apparatur mit Lösungsmitteln, Einschalten von Reglern und digitalen Steuerungen usw. Der Rechner hat in dieser Betriebsart unterstützende Funktionen. Es kann nützlich sein, den Steuerbereich in dieser Betriebsart durch ein sequentielles Steuerprogramm zu unterstützen. Ausschlaggebend dafür sind vor allem Sicherheitserwägungen bei sehr komplexen Inbetriebnahmevorschriften. Während der Laufzeit der Betriebsart 121 kann die Arbeitskontrolle an das sequentielle Steuerprogramm übergeben werden; nach Ablauf dieser Programmsequenz erfolgt die Rückgabe der Kontrolle an die Konti-Steuerung. Die zulässigen Folgebetriebsarten sind (STOP) 120 und (ANFA) 122.

In der Betriebsart (ANFA) 122 wird das eigentliche Verfahren gestartet: Es beginnt der Stofffluss, bei Umsetzungsstufen setzt die Reaktion ein. Der Fahrwert des Ausgangszustandes ist 0, der Zielfahrwert liegt beliebig innerhalb des zulässigen Arbeitsbereichs. Der Arbeitsstart erfolgt mit einer Fahrwertstrategie. Beginnend mit einem Startfahrwert wird in festgelegten Fahrwertsprüngen der Arbeits- und Fahrwertzustand an den Sollfahrwert herangeführt. Die Sprungdauer jeder Fahrwertstufe ist durch die Rezeptur und die Grösse der Apparatur bedingt. Eine Fahrwertänderung ist nur nach Normzustandssignalprüfung möglich. Die optimale Sprungdauer kann aus dem Arbeitsvolumen der Apparatur und dem Ausgangsvolumenfluss über eine Verweilzeitfunktion vom Rechner ermittelt werden. Die Betriebsart (ANFA) 122 ist beendet, wenn der Sollfahrwert erreicht ist, die vorgeschreibene Sprungzeit abgelaufen und das Normalzustandssignal vorliegt. Dies wird gebildet durch Verknüpfung von relevanten Messignalen im Rechner und kennzeichnet die Einhaltung der für den stationären Zustand charakteristischen Arbeitsbedingungen über eine bestimmte Zeit hinweg. Sind diese Bedingungen erfüllt, wird die Betriebsart (ANFA) 122 beendet und durch die Betriebsart (NORM) 123 ersetzt. Mit der Betriebsart (ANFA) 122 wird, ausgehend von einer produktleeren Apparatur, der stationäre Arbeitszustand bei einem bestimmten Fahrwert erreicht.

Beim Anfahren von Steuerbereichen aus mehreren gekoppelten Apparaturen muss eine Gesamtanfahrstrategie durchgeführt werden. Sie hängt ab von der Anzahl der Reaktoren der Gruppe, den Arbeitsvolumina aller Reaktoren der Gruppe, dem Vorlagevolumen in den Reaktoren, dem Ausgangsfluss aller Reaktoren bei Nennleistung und vom Arbeitsvolumen und Eingangsfluss des verweilzeitbestimmenden Reaktors. Die einzig möglichen, durch Befehl herstellbaren Folgebetriebsarten sind (HALT) 126 oder (ABFA) 125.

Die Betriebsart (NORM) 123 unterscheidet sich von allen anderen Betriebsarten dadurch, dass sie nicht gewollt, durch einen Befehl, hergestellt werden kann. Sie kann nur nach Ablauf einer anderen Betriebsart, nämlich (ANFA) 122, (AEND) 124 oder (WEIL) 128 erreicht werden. Die Betriebsart (NORM) 123 umfasst alle stationären Zustände bei allen möglichen Fahrwerten. Die möglichen Folgebetriebsarten sind (AEND) 124, (HALT) 126 und (ABFA) 125.

Eine Laständerung ist nur durch die Betriebsart (AEND) 124 von (NORM) 123 aus möglich. Ausgehend von einem stationären Zustand mit einem festen Fahrwert wird ein neuer stationärer Zustand mit einem geänderten Fahrwert hergestellt. Ist der neue Fahrwert höher als der alte, wird eine Strategie durchgeführt; bei einem neuen niedrigeren Zielfahrwert wird ein Sprung ohne Sprungwartezeit durchgeführt, da bei einer Fahrwertminderung stets ein sicherer Anlagenzustand entsteht. Wie bei (ANFA) 122 entsteht auch bei (AEND) 124 nach Ablauf der Strategie in gleicher Weise die Betriebsart (NORM) 123. Mögliche Folgebetriebsarten sind wieder (HALT) 126 und (ABFA) 125.

Die Betriebsart (HALT) 126 unterbricht alle Arbeitsbetriebsarten (ANFA) 122, (NORM) 123, (AEND) 124, (WEIL) 128, (ABFA) 125. Eingeleitet wird sie durch einen direkten Befehl, durch einen programmierten Befehl, der auf Überprüfung von externen und programmierten Signalen beruht (beispielsweise kann ein HALT im Vorläufer- oder Nachfolgesteuerbereich ein HALT erzeugen) oder durch ein Störsignal der Anlage. Ein HALT bewirkt eine Unterbrechung des Produktflusses zur und aus der Apparatur; damit wird der eigentliche Arbeitsvorgang unterbrochen. In der Betriebsart HALT werden jedoch die physikalischen Arbeitsbedingungen beibehalten. Bei kurzfristigen Störungen soll der Prozess ohne Zeitverlust fortgesetzt werden können. Es ist zu beachten, dass eine Unterbrechung der Stoffzufuhr in einer Reaktionsstufe in der Regel nicht eine Unterbrechung der chemischen Reaktion bedeutet. Diese läuft bei Änderung der stationären Stoffkonzentrationen sich verlangsamend weiter, wobei der innere Zustand des Stoffinhalts sich zeitabhängig verändert und eine Fortsetzung des Arbeitsbetriebs zunehmend erschwert. Beim Weiterlauf mit fortschreitender Störungsdauer muss von einem immer weniger definierten Ausgangszustand ausgegangen werden. Um dies zu vermeiden, können die physikalischen Bedingungen mit einer Betriebsart (HALT 2) 127 geändert werden, z.B. einer Temperatur- oder Druckabsenkung. Mögliche Folgebetriebsarten von (HALT) 126 sind (HALT 2) 127, (WEIL) 128 und (ABFA) 125.

Bei der Betriebsart (HALT 2) 127 werden zusätzlich Verfahrensparameter geändert. Mögliche Folgebetriebsart ist (HALT) 125.

Durch die Betriebsart (WEIL) 128 wird der durch (HALT) 126 unterbrochene Zustand jeder Betriebsart wiederhergestellt. Der Zielfahrwert ist der Fahrwert vor der Unterbrechung. Bei einer längeren Unterbrechungsdauer kann der Apparatezustand jedoch soweit verändert sein, dass der verlassene Zustand nicht mehr erreicht werden kann. Dann muss der Zustand wieder neu mit einer Quasi-Anfahrstrategie aufgebaut werden. Mögliche Folgebetriebsarten sind (HALT) 126 und (ABFA) 125.

Ausgehend von jeder «Arbeits»-Betriebsart kann (ABFA) 125 eingeleitet werden. Die Massnahmen bei dieser Betriebsart sind nahezu identisch, wie bei der Betriebsart (HALT) 126. Wird jedoch bei (HALT) mit der Sperrung des Einlaufflusses zugleich der Auslauffluss aus der Apparatur gesperrt, bleibt bei (ABFA) 125 dieser Auslauf erhalten, bis die Apparatur entleert ist. Die nachfolgenden Steuerbereiche verbleiben in ihrer bisherigen Betriebsart ohne Änderung des Fahrwertes und verarbeiten das vom abfahrenden Steuerbereich abgegebene Produkt normal weiter. Ist die Apparatur des Steuerbereichs von verwertbaren Produkten entleert, wird durch Einleiten der Betriebsart (STOP) 120 (mit Befehl) das Abfahren beendet. Nur wenn der vorausgehende Steuerbereich in (STOP) 120 ist, kann ein Abfahrbefehl für einen Steuerbereich gegeben werden. Die physikalischen Bedingungen bleiben bis zum Vorgangsende aufrechterhalten.

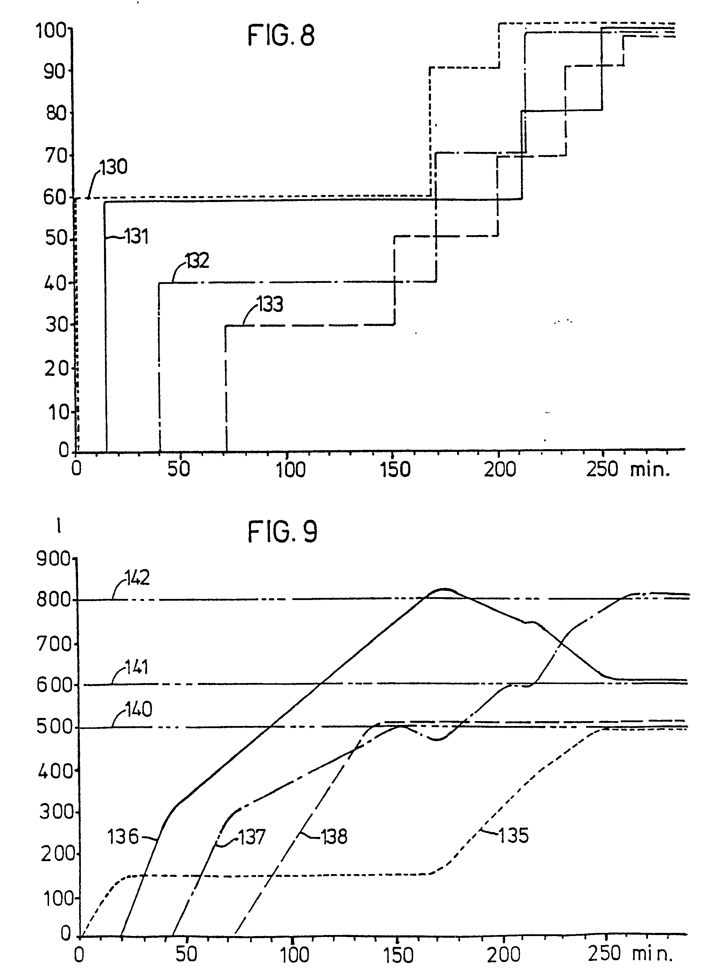

In den Figuren 8 und 9 ist ein Anfahrvorgang in einer Konti-Gruppe aus vier Konti-Steuerbereichen beispielhaft dargestellt. Auf der Abszisse ist die Zeit in Minuten dargestellt, auf der Ordinate die Strategie-Stufen-Fahrwerte der Steuerbereiche. Entsprechend der Erfindung kann sich der Fahrwert nur in diskreten Stufen ändern; die Treppenkurven 130 bis 133 geben die Fahrwert-Zeit-Strategien in den Steuerbereichen 1 bis 4 an. Die Mindestdauer in einer Fahrwertstufe ist 3,5-mal der Verweilzeit in der entsprechenden Steuerbereichsapparatur.

Gemäss der Fahrwertstrategie in Fig. 8 sind in Fig. 9 die jedem Steuerbereich nachgeschalteten Pufferstände dargestellt. Beim Anfahren sind naturgemäss alle Puffer leer. In diesem speziellen Beispiel ist der Normalstand des Puffers nach dem Steuerbereich 1 und nach dem Steuerbereich 4 jeweils 500 l, 600 l nach dem Steuerbereich 2 und 800 l nach dem Steuerbereich 3. Die Normal-Pufferstände sind durch die strichlierten Linien 140 bis 142 dargestellt. Durch die Wahl des Strategiebeginns und durch eine Verlängerung der Laufzeit des ersten Fahrwertsprunges bei den Steuerbereichen 1 bis 3 wird erreicht, dass nach Abschluss aller Steuerbereichsstrategien alle Puffer den Normalstand aufweisen. Die Kurven für den Volumenstand in den Puffern von 135 bis 138 in Fig. 9 sollen in ihrem Linienmuster auf die ähnlich strichlierten Fahrwerte in Fig. 9 hinweisen.

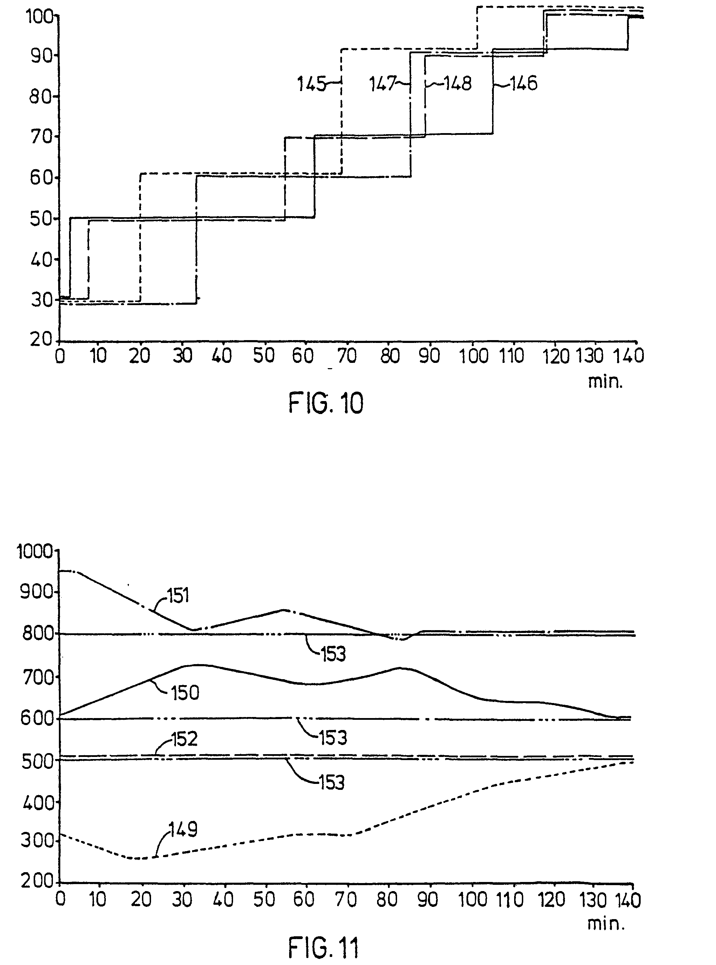

In den Figuren 10 und 11 ist ein Laständerungsvorgang in einer vierstufigen Anlage dargestellt. Ausgehend vom Fahrwert 30 soll der Fahrwert 100 erreicht werden. Als Besonderheit soll in diesem Beispiel noch dargestellt werden, dass zwar die Ausgangspuffer für den Steuerbereich 2 und 4 im Normalbereich liegen, jedoch der Puffer zum Steuerbereich 1 niedriger, der Puffer zum Steuerbereich 3 höher als der Normal-Pufferstand sein soll. Zum Zeitpunkt 0 wird die Betriebsart Laständerung eingeleitet. Alle vier Steuerbereiche befinden sich im Fahrtwert 30, die treppenartigen Fahrwertstufen sind mit 145 bis 148 für die Steuerbereiche 1 bis 4 bezeichnet.

Die zeitlichen Schwankungen der Ausgangspufferstände der vier Steuerbereiche sind in Fig. 11 dargestellt (Kurven 149 bis 152, gleiche Symbolik wie in Fig. 10). Das Normal-Puffervolumen für die Ausgangspuffer der Steuerbereiche 1 und 4 beträgt 500 l (153), 600 l (154) für den Steuerbereich 2 und 800 l (155) für den Steuerbereich 3. Bei der in Fig. 10 dargestellten Fahrwertstrategie ist nach 140 Minuten auch eine Standkorrektur der Puffer hinter den Steuerbereichen 1 und 3 erreicht.

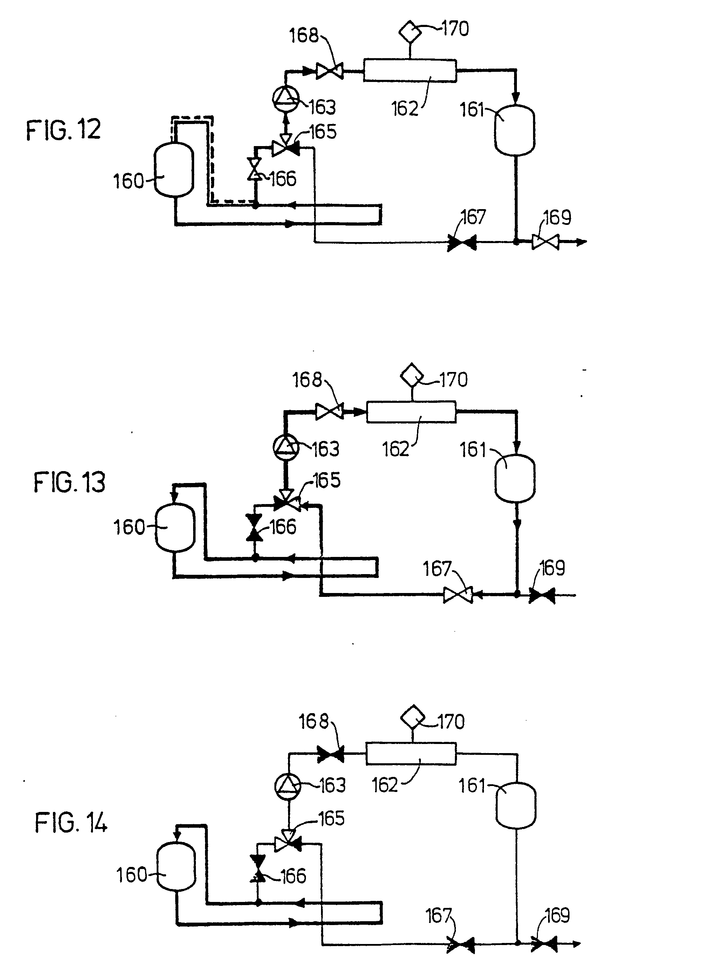

Ein Beispiel für verschiedene Flusswege in verschiedenen Betriebsarten ist in den Figuren 12 bis 14 dargestellt. Es handelt sich um einen ganz einfachen Steuerbereich, bei dem der Eingangsfluss aus dem Eingangspuffer 160 gleich dem Ausgangsfluss in den Ausgangspuffer 161 ist. Der Steuerbereich 162 ist eine aus vielen Einzelapparaten bestehende Hochdruckapparatur. Ausserdem sind noch eine Hochdruckspeisepumpe 163 und einige Ventile 165 bis 169 dargestellt. Der Rhombus 170 kennzeichnet Regelkreise in der Arbeitsapparatur, mit denen die physikalischen Arbeitsbedingungen in der Apparatur für alle Fahrwerte und Betriebsarten entsprechend der Rezeptur hergestellt werden.

In Fig. 12 arbeitet der Steuerbereich in einer aktiven Betriebsart (ANFA), (AEND), (WEIL), (NORM); der Flussweg ist dick eingezeichnet. Aus dem Puffer 160 fliesst das Einsatzvolumen über das Ventil 166 und 165 zur Dosierpumpe 163 und von dort aus über das Ventil 168 in die Arbeitsapparatur 162; von dort gelangt es in den Puffer 161 und kann über das Ventil 169 abgeleitet werden. Der Flussweg ist durch folgende Schaltzustände bestimmt:

Die Ventile 166, 165, 168, 169 sind offen, Ventil 167 zu,

Pumpe 163 und Regler 170 eingeschaltet.

In Fig. 13 ist der Flussweg für die Betriebsart (HALT) angegeben. Es besteht kein Eingangs- und Ausgangsfluss; es werden aber alle Arbeitsbedingungen aufrechterhalten. Dazu gehört der Volumenfluss innerhalb der Steuerbereichsapparatur; Arbeitstemperaturen und Arbeitsdruck werden aufrechterhalten. Das Eingangsventil 166 ist geschlossen, das Wegeventil 165 umgeschaltet; Rückflussventil 167 ist geöffnet und das Abgabeventil 169 ist geschlossen. Pumpe 163 und Regler 170 bleiben eingeschaltet.

In der Fig. 14 ist der Flussweg für die Betriebsarten (STOP) und (VORB) angegeben. Es besteht kein Volumenfluss; die Anlage arbeitet nicht. Die Ventile 166, 165, 167, 168 und 169 sind zu; die Pumpe 163 und der Regler 170 sind ausgeschaltet.

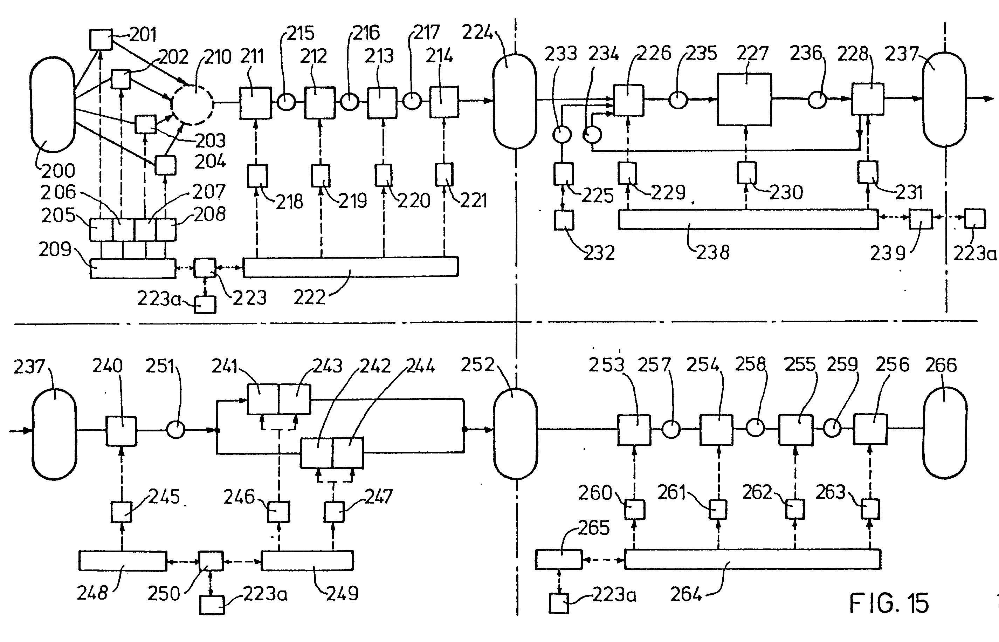

Ein Beispiel für die Strukturierung einer Grossanlage ist in Fig. 15 dargestellt. Es handelt sich um eine Anlage zur Herstellung einer Amino-Naphthol-Sulfonsäure. Die Anlage wird aus vier Hauptgruppen gebildet. Die erste Hauptgruppe umfasst eine Apparatur zwischen den Kästen 200 und 224. Der Kreis 200 symbolisiert alle Vorratsgefässe (Puffer), die die Einsatzprodukte für die Batch-Steuerbereiche 201, 202, 203, 204 enthalten. In diesen Batch-Steuerbereichen wird in Schrittfolgesequenzen eine Naphthalintrisulfonsäure hergestellt.

Die einzelnen Batch-Steuerbereiche werden von digitalen Ablaufsteuerungen 205 bis 208 geführt, jedem Steuerbereich 201 bis 204 ist eine Steuerung 205 bis 208 zugeordnet. Die Batch-Gruppensteuerung 209 koordiniert die Arbeit der zu einer Batchgruppe zusammengefassten Steuerbereiche 201 bis 204. Sie bestimmt den Startbeginn für die Steuerbereiche und regelt die Abgabe von fertiggestelltem Produkt an den Puffer 210. In diesem Beispiel ist der Puffer 210 ein virtueller Puffer, d.h. es ist kein besonderes Puffergefäss vorhanden, sondern als Puffer werden jeweils die Steuerbereichsapparaturen verwendet, die fertiggestelltes Produkt enthalten.

Von dem Puffer 210 geht der Eingangsvolumenfluss für die folgende Konti-Gruppe aus, die aus einer Nitrierapparatur 211, aus einer Nitroseaustreibung und Gipsfällung 212, einer Gipsfiltration 213 und einer Kreidefällung 214 besteht. Die Steuerbereiche 211 bis 214 sind untereinander durch die Puffer 215 bis 217 entkoppelt und werden durch die Steuerbereichsführungen 218 bis 221 autark geführt.

Die Koordination der Steuerbereichsführungen übernimmt die Konti-Gruppensteuerung 222, von der den einzelnen Steuerbereichen Betriebsart und Fahrwerte als Führungsgrössen zugewiesen werden.

Batch- und Gruppensteuerungen werden von der Hauptgruppensteuerung 223 koordiniert, die die Gruppenfahrwerte festlegt. Sie benutzt dabei Informationen der Batch- und Konti-Gruppensteuerung und Fahrwertanweisungen des Verfahrensautopiloten 223 a. Der letzte Steuerbereich gibt sein Produkt an den Puffer 224 ab.

Die zweite Hauptgruppe wird aus den Batch-Steuerbereichen 225 und den Konti-Steuerbereichen 226, 227, 228 gebildet, die von den Konti-Steuerbereichsführungen 229 bis 231 geführt werden. Der Batch-Steuerbereich 225 besitzt eine Ablaufsteuerung 232.

Die Steuerbereiche sind durch die Puffer 233 bis 236 voneinander entkoppelt. Die Entkopplung zu den benachbarten Hauptgruppen geschieht durch den Eingangspuffer 224 und den Ausgangspuffer 237. Die Arbeit der aus den Steuerbereichen 226 bis 228 gebildeten Gruppe wird durch die Gruppensteuerung 238 in der bei der Hauptgruppe 1 geschilderten Weise vorgenommen, wobei die Hauptgruppensteuerung 239 eine evtl. Fahrwertbegrenzung der Verfahrenssteuerung (VAP) 223 a in einem Gruppenfahrwert für die Konti-Gruppensteuerung 228 berücksichtigt.

Die zweite Hauptgruppe stellt eine Hochdruckhydrieranlage dar: Im Steuerbereich 226 wird aus verschiedenen Komponenten das Einsatzgemisch hergestellt; der Batch-Steuerbereich 225 liefert einige dieser Komponenten; das hergestellte Produkt läuft in den Puffer 235. Im Steuerbereich 227 wird das Einsatzgemisch bei hoher Temperatur und Druck mit Wasserstoff behandelt und danach unter niedrigem Druck in den Puffer 236 überführt. Im Steuerbereich 228 wird aus dem Produkt des Puffers 236 der im Steuerbereich 226 zugesetzte Katalysator durch eine mehrstufige Filtration entfernt und über den Entkopplungspuffer 234 wieder dem Steuerbereich 226 zur Verfügung gestellt, wobei das vom Katalysator befreite Produkt dem Ausgangspuffer 237 zufliesst.

Die Hauptgruppe 3 wird aus dem Konti-Steuerbereich 240 und den beiden parallelen Batch-Steuerbereichen 241 und 242, die zudem seriell jeweils mit einer Nachfolge-Batchstufe 243, 244 verknüpft sind, gebildet. Für den Konti-Steuerbereich und jede serielle Batch-Verknüpfung ist eine Steuerbereichsführung 245, 246, 247 eingesetzt.

Die Koordination erfolgt in der bereits geschilderten Weise durch die Konti-Gruppensteuerung 248, die Batch-Gruppensteuerung 249 und die Hauptgruppensteuerung 250.

Das aus dem Eingangspuffer 237 kommende Produkt wird in einer mehrstufigen Eindampfanlage 240 aufkonzentriert, wobei der abgehende Volumenfluss vom Puffer 251 aufgenommen wird. Aus diesem Puffer werden taktweise die Batch-Steuerbereiche 241 und 242 beschickt, in denen das Produkt mit Natronlauge bei höherem Druck und höherer Temperatur behandelt wird. In den seriell nachgeschalteten Batch-Stufen 243 und 244 wird das Produkt aus 241 und 242 entspannt, abgekühlt, verdünnt und periodisch an den Puffer 252 abgegeben.

Die Hauptgruppe 4 wird aus den Konti-Steuerbereichen 253 bis 256 gebildet, die durch die Puffer 257 bis 259 voneinander entkoppelt sind. Den Konti-Steuerbereichen sind die Führungen 260 bis 263 zugeordnet, die durch die Konti-Gruppensteuerung 264 in der bereits beschriebenen Weise koordiniert werden. Die Hauptgruppensteuerung 265 berücksichtigt weiterhin die Arbeit der der vorangehenden Hauptgruppe 3 angehörenden Batch-Gruppe 249 und Anweisungen der Verfahrenssteuerung 223 a und leitet hieraus Gruppenfahrwerte für die Konti-Gruppensteuerung 265 ab.

Im Steuerbereich 253 wird in dem aus dem Puffer 252 kommenden Fluss durch Säurezustatz das in ihm enthaltene Produkt bei höherer Temperatur gefällt und gasförmiges Nebenprodukt ausgetrieben. Im Steuerbereich 254 wird durch Vakuumkühlung der Volumenfluss abgekühlt. Im Steuerbereich 255 wird der ausgefallene Feststoff durch Filtration isoliert und im Steuerbereich 256 in einem Zerstäubungstrockner getrocknet und für das Feststofflager 266 verpackt.

## Patentansprüche

1. Verfahren zur Steuerung chemischer Produktionsanlagen durch manuelle, geregelte und/oder prozessgesteuerte Führungssysteme, indem ein Prozess in Teilaufgaben über Schaltungen der Apparate und Einstellungen der Parameter entsprechend der Rezeptur und den ermittelten Messwerten gefahren wird, dadurch gekennzeichnet, dass jedem der durch Puffer untereinander entkoppelten, autark arbeitenden, sequentiellen oder kontinuierlichen Teilaufgaben mit zwangsläufigem Volumenfluss über einen zugehörigen Steuerbereich mittels jeweils nur einem der diskreten, auf Nennleistung bezogenen Fahrwert und nur einer der zugelassenen Betriebsarten zur Schaltung der Flusswege gesteuert wird, welche wiederum mit optimalen, einmal fest vorgegebenen Parametern bzw. Flusswegen gekoppelt sind.

2. Verfahren nach Anspruch 1, dadurch gekennzeichnet, dass Sprunghöhe und Sprungwartezeit des Fahrwertes in Abhängigkeit von den benachbarten Pufferständen nach Vorliegen eines quasistationären Zustandes der Teilaufgabe geändert werden.

3. Verfahren nach den Ansprüchen 1 bis 2, dadurch gekennzeichnet, dass als Sprungwartezeit eine 3- bis 5-fache Verweilzeit des grössten Behälters der Apparate innerhalb des Steuerbereiches oder eine 3- bis 5-fache maximale Totzeit eines im zugehörigen Steuerbereich verwendeten Regelgerätes eingesetzt wird.

4. Verfahren nach den Ansprüchen 1 bis 3, dadurch gekennzeichnet, dass der Fahrwert in Stufen von 5, bevorzugt von 10 bis 30 – bezogen auf den Nennfahrwert 100 –, geändert wird.

## Revendications

1. Procédé pour la commande d'installations de production chimiques par des systèmes de conduite manuels, réglés et/ou commandés par le processus, un processus étant conduit en tâches partielles par des commutations des appareils et des réglages des paramètres en fonction de la formule et des valeurs mesurées, ledit procédé étant caractérisé en ce que chacune des tâches partielles séquentielles ou continues, découplées par des réservoirs tampons et à fonctionnement autonome, est commandée avec un débit-volume imposé par un secteur de commande correspondant, à l'aide dans chaque cas d'un seul des seuils discrets de la valeur de conduite rapportés à la capacité nominale et d'un seul des modes tolérés pour la commutation des trajets, qui sont couplés à des paramètres et des trajets optimaux, définis une fois pour toutes.

2. Procédé selon revendication 1, caractérisé en ce que l'amplitude et le délai d'attente de l'échelon de la valeur de conduite sont modifiés en fonction des niveaux des réservoirs tampons voisins, après l'apparition d'un état quasi-stationnaire de la tâche partielle.

3. Procédé selon revendications 1 et 2, caractérisé par l'emploi d'un délai d'attente de l'échelon égal à 3–5 fois le temps de séjour dans le plus grand réservoir des appareils à l'intérieur du secteur de commande ou à 3–5 fois le temps mort maximal d'un régulateur utilisé dans le secteur de commande correspondant.

4. Procédé selon revendications 1 à 3, caractérisé en ce que la valeur de conduite est modifiée en seuils de 5, et de préférence de 10 à 30, rapportés à la valeur de conduite nominale de 100.

## Claims

1. Process for the control of chemical production plants by manual, feedback-controlled and/or process-controlled pilot systems, in which a process is operated in individual operations via switching arrangements of the apparatuses and settings of the parameters according to the recipe and the calculated measured values, characterised in that each of the autarchically functioning, sequential or continuous, individual operations, which are decoupled from each other by means of buffers and have a predetermined volume flow is controlled via a corresponding control region by means of, in each case, only one of the discrete operating values based on the nominal capacity and only one of the permitted modes of operation for the switching of the flow paths, which are in turn coupled with optimum definitively preset parameters or flow paths.

2. Process according to Claim 1, characterised in that the degree of the change in and the waiting time before changing the operating value depend on the neighbouring buffer levels after a quasi-stationary state of the individual operation is present.

3. Process according to Claims 1 to 2, characterised in that 3 to 5 times the residence time of the largest container of the apparatuses within the control region or 3 to 5 times the maximum idle time of one of the control devices used in the corresponding control region is used as the waiting time preceding a change.

4. Process according to Claims 1 to 3, characterised in the operating value is changed in steps of 5, preferably 10 to 30 – based on the nominal operating value 100.

FIG.1

FIG.2

FIG.3

13

FIG. 4

FIG. 5

# FIG. 6

FIG. 7

FIG. 8

FIG. 9

FIG. 10

FIG. 11

FIG. 12

FIG. 13

FIG. 14

FIG. 15